# EUROPEAN PATENT SPECIFICATION

(11) **EP 2 943 874 B1**
(45) Date of publication and mention of the grant of the patent: **18.03.2020**
(21) Application number: 14738105.7
(22) Date of filing: 08.01.2014
(51) Int. Cl.: G06F 7/02, G06F 17/40, H04L 12/26, H04L 12/24

(54) **NOTIFICATION ROUTING TO A USER DEVICE**
BENACHRICHTIGUNGSWEITERLEITUNG AN EINE BENUTZERVORRICHTUNG
ROUTAGE D'UNE NOTIFICATION VERS UN DISPOSITIF D'UTILISATEUR

(30) Priority: 08.01.2013 US 201313736348
(43) Date of publication of application: 18.11.2015
(60) Divisional application: 19219913.1
(73) Proprietor: eBay, Inc., San Jose, CA 95125 (US)
(72) Inventor: SRINIVASAN, Arun, Cupertino, California 95014 (US); SHAH, Anthony, Santa Clara, California 95050 (US); YANG, Zhenyin, Saratoga, California 95070 (US); MURARKA, Vivek Kumar, San Jose, California 95118 (US); ANAMANAMURI, Suresh, San Jose, CA 95125 (US); SIVASHANMUGAM, Udaiyaraj Subramaniam, San Jose, California 95126 (US); ANANTA, Hemadri, Cupertino, California 95014 (US); ROMERO, Steven, Portland, Oregon 97239 (US)
(74) Representative: Schwegman Lundberg Woessner Limited
(86) International application number: PCT/US2014/010702
(87) International publication number: WO 2014/110147

(56) References cited:
- US-A1- 2004 223 485
- US-A1- 2004 254 998
- US-A1- 2008 015 878
- US-A1- 2009 055 270
- US-A1- 2009 170 480
- US-A1- 2010 235 848
- US-A1- 2011 289 170
- US-B2- 7 818 674
- US-B2- 7 886 305

## Description

### TECHNICAL FIELD

This application relates generally to data processing within a network-based system, and more specifically to systems and methods for routing notifications to a user device.

### SUMMARY

The present invention provides a system and method as defined in the appended claims.

### BACKGROUND

Currently, notification services may allow an application executing on a mobile device to notify a user of an important event or received message without the need for the application to be executing on the mobile device. For example, a mobile device user may be provided a notification message alerting them that a text message has been received without the underlying messaging application being launched. Certain notification systems may use push technology to forward notifications from third party applications hosted on third party servers through the use of a constant, uninterrupted connection with a communication network (e.g., the Internet). Depending on the application, a variety of different events may trigger the sending of a notification to the user. Notification systems may provide the user an ability to specify particular applications and events, if any, that are to cause the user to be provided with a notification.

However, such systems are currently limited in scope and functionality in providing notifications based on the actual preference of the user. For instance, a user who may have a particular application installed on multiple devices, will be unnecessarily provided with a notification to each of the devices in which the application is installed. Further, a user who may have a number of related applications providing similar functionalities installed on a single device may be provided with multiple duplicate notifications for an event common to each application. Moreover, an event that triggers a notification may occur at a time when the receipt of the notification is inconvenient to the user, which may either interrupt the user or cause the user to be unable to view the message.

US2004/0254998 discloses a messaging system that determines whether a recipient is available before allowing a message sent from a sender to be received by the recipient. A context analyzer gathers contextual information on a user's activities to be used in the determination.

### BRIEF DESCRIPTION OF THE DRAWINGS

Some embodiments are illustrated by way of example and not limitation in the figures of the accompanying drawings.
FIG. 1 is a network diagram depicting a network system having a client-server architecture configured to exchange data over a network, according to an example embodiment.
FIG. 2 is a block diagram illustrating an example embodiment of multiple marketplace and payment applications, which are provided as part of the network based marketplace.
FIG. 3 is a block diagram illustrating an example embodiment of multiple notification applications, which are provided as part of the network based marketplace.
FIG. 4 is a flowchart illustrating an example method of routing notifications to a mobile device, according to an example embodiment.
FIG. 5 illustrates a portion of an example user interface including a notification provided to a client device.
FIG. 6 is a block diagram illustrating an example client device , such as a mobile device, according to an example embodiment.
FIG. 7 is a diagrammatic representation of a machine in the example form of a computer system within which a set of instructions for causing the machine to perform any one or more of the methodologies discussed herein may be executed.

### DETAILED DESCRIPTION

Reference will now be made in detail to specific example embodiments for carrying out the inventive subject matter. Examples of these specific embodiments are illustrated in the accompanying drawings. It will be understood that these examples are not intended to limit the scope of the claims to the described embodiments. On the contrary, these example embodiments are intended to cover alternatives, modifications, and equivalents as may be included within the scope of the disclosure as defined by the appended claims. In the following description, specific details are set forth in order to provide a thorough understanding of the subject matter. Embodiments may be practiced without some or all of these specific details. In addition, well known features may not have been described in detail to avoid unnecessarily obscuring the subject matter.

In accordance with the present disclosure, components, process steps, and/or data structures may be implemented using various types of operating systems, programming languages, computing platforms, computer programs, and/or general purpose machines. In addition, those of ordinary skill in the art will recognize that devices of a less general purpose or nature, such as hardwired devices, field programmable gate arrays (FPGAs), application specific integrated circuits (ASICs), or the like, may also be used without departing from the scope of the concepts disclosed herein. Embodiments may also be tangibly embodied as a set of computer instructions stored on a computer readable medium, such as a memory device.

Aspects of the present disclosure provide systems and methods for communicating a notification to at least one device of a user according to the preference of the user. In some embodiments, the preference of a user may be determined based on tracking of the user's activity on each device of the user. In other embodiments, the preference of the user is based on the user activity as well as user designated preference settings related to receiving of notifications.

The preference of the user may, for example, include a device for receiving notifications, an application executing on a device for receiving notifications, a time to receive notifications, specified notification types and communication types. Notifications may be communicated to a user based on the detection of an event, which may be specified by a user to trigger the communication of a notification. In some embodiments, the notification may be stored and viewed at a later time by the user.

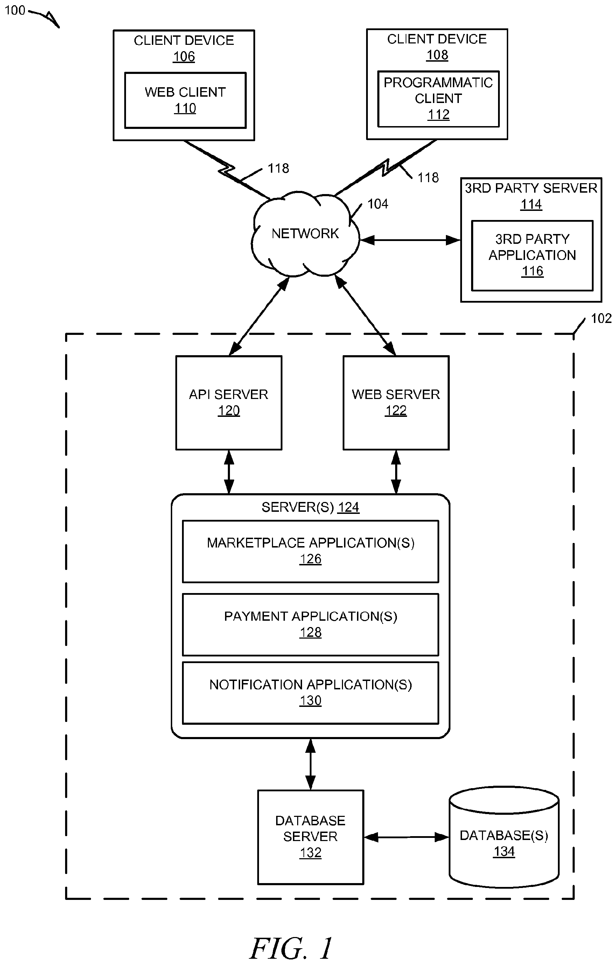

FIG. 1 is a network diagram depicting a network system 100, according to one embodiment, having a client-server architecture configured to exchange data over a network. For example, the network system 100 may be a network-based marketplace 102 where clients may communicate and exchange data within the network system 100. The data may pertain to various functions (e.g., online purchases) and aspects (e.g., routing notifications) associated with the network system 100 and its users.

A data exchange platform, in an example form of a network-based marketplace 102, may provide server-side functionality, via a network 104 (e.g., the Internet), to one or more client devices. The one or more client devices may be operated by users that use the network system 100 and more specifically, the network-based marketplace 102, to exchange data over the communication network 104. A user may operate as a seller, a buyer, or both, within the network-based marketplace 102. The data exchanges occurring over the communication network 104 may include transmitting, receiving (i.e., communicating), and processing data to, from, and regarding content and users of the network system 100. The data may include, but are not limited to, user preference data; product and service reviews; product, service, manufacture, and vendor recommendations and identifiers; product and service listings associated with buyers and sellers; product and service advertisements; auction bids; user notifications; and transaction data, among other things.

In various embodiments, the data exchanges within the network system 100 may be dependent upon user-selected functions available through one or more client or user interfaces (UIs). The UIs may be associated with a client device, such as a client device 106 using web client 110. The web client 110 may be in communication with the network-based marketplace 102 via a web server 122. The UIs may also be associated with a client device 108 using a programmatic client 112, such as a client application, or a third party server 114 (e.g., one or more servers or client devices) hosting a third party application 116. It can be appreciated in various embodiments that the client devices 106, 108, and/or the third party server 114 may be associated with a buyer, a seller, a third party electronic commerce platform, a payment service provider, or a shipping service provider, each in communication with the network-based marketplace 102 and optionally each other. The buyers and sellers may be any one of individuals, merchants, or service providers, among other things.

The client devices 106 and 108 may be any of a variety of types of devices (for example, a cellular telephone, a personal digital assistant (PDA), a Personal Navigation Device (PND), a handheld computer, a tablet computer, a desktop computer, a notebook computer, a wearable computing device, or other type of movable device). The client devices 106 and 108 may interface via a connection 118 with a communication network 104 (e.g., the Internet or WAN). Depending on the form of the client device 106 and 108, any of a variety of types of connections 118 and communication networks 104 may be used.

For example, the connection 118 may be Code Division Multiple Access (CDMA) connection, a Global System for Mobile communications (GSM) connection, or other type of cellular connection. Such connection 118 may implement any of a variety of types of data transfer technology, such as Single Carrier Radio Transmission Technology (1xRTT), Evolution-Data Optimized (EVDO) technology, General Packet Radio Service (GPRS) technology, Enhanced Data rates for GSM Evolution (EDGE) technology, or other data transfer technology (e.g., fourth generation wireless, 4G networks). When such technology is employed, the network 104 may include a cellular network that has a plurality of cell sites of overlapping geographic coverage, interconnected by cellular telephone exchanges. These cellular telephone exchanges may be coupled to a network backbone (for example, the public switched telephone network (PSTN), a packet-switched data network, or to other types of networks).

In another example, the connection 118 may be Wireless Fidelity (Wi-Fi, IEEE 802.11x type) connection, a Worldwide Interoperability for Microwave Access (WiMAX) connection, or another type of wireless data connection. In such an embodiment, the network 104 may include one or more wireless access points coupled to a local area network (LAN), a wide area network (WAN), the Internet, or other packet-switched data network.

In yet another example, the connection 118 may be a wired connection, for example an Ethernet link, and the network 104 may be a LAN, a WAN, the Internet, or other packet-switched data network. Accordingly, a variety of different configurations are expressly contemplated.

Turning specifically to the network-based marketplace 102, an application programming interface (API) server 120 and a web server 122 are coupled to, and provide programmatic and web interfaces respectively to, a plurality of servers 124. The servers 124 host one or more marketplace application(s) 126, payment application(s) 128, and notification application(s) 130. The plurality of servers 124 may be coupled via these interfaces to the network 104, for example, via wired or wireless interfaces. The plurality of servers 124 are, in turn, shown to be coupled to one or more database server(s) 132 that facilitate access to one or more database(s) 134. In some examples, the plurality of servers 124 can access the database(s) 134 directly without the need for a database server.

The marketplace applications 126 may provide a number of marketplace functions and services to users that access the network-based marketplace 102. The payment applications 128 may likewise provide a number of payment services and functions to users. The payment applications 128 may allow users to accumulate value (e.g., in a commercial currency, such as the U.S. dollar, or a proprietary currency, such as "points") in accounts, and then later to redeem the accumulated value for products (e.g., goods or services) that are made available via the marketplace applications 126. The notification applications 130 may provide a number of notification services and functions to users. The notification applications 130 may route notifications to a user device (e.g., client device 106) concerning events related to activity of the marketplace and payment applications 126 and 128. Notifications may be routed based on the preference of the user as determined by the monitored activity of the user as well as a set of user designated preference settings. While the marketplace, payment and notification applications 126, 128 and 130 are shown in FIG. 1 to form part of the network-based marketplace 102, it will be appreciated that, in alternative embodiments, the payment applications 128 may form part of a payment service that is separate and distinct from the network-based marketplace 102. Similarly, the notification applications 130 may form part of a notification service that is separate and distinct from the network-based marketplace 102.

Database server 132 may facilitate access to one or more database(s) 134 and retrieve data for inclusion in network-based marketplace 102. The data may correspond to user activity information, data related to user activity, user preference settings, user recommendations, coupons or advertisements, listings of products or related products offered for sale, and so forth. In some embodiments, the database(s) 134 may include databases both internal to the network-based marketplace 102 and external.

FIG. 1 also illustrates a third party application 116 that may execute on a third party server 114 and may have programmatic access to the network-based marketplace 102 via programmatic interface provided by the API server 120. For example, the third party application 116 may use information retrieved from the network-based marketplace 102 to support one or more features or functions on a website hosted by the third party. The third party website may, for example, provide one or more marketplace or payment functions that are supported by the relevant applications of the network-based marketplace 102.

Further, while the system 100 shown in FIG. 1 employs a client-server architecture, the present inventive subject matter is of course not limited to such an architecture, and could equally well find application in an event-driven, distributed, or peer-to-peer architecture system, for example. The various modules of the plurality of servers 124 may also be implemented as standalone systems or software programs, which do not necessarily have networking capabilities.

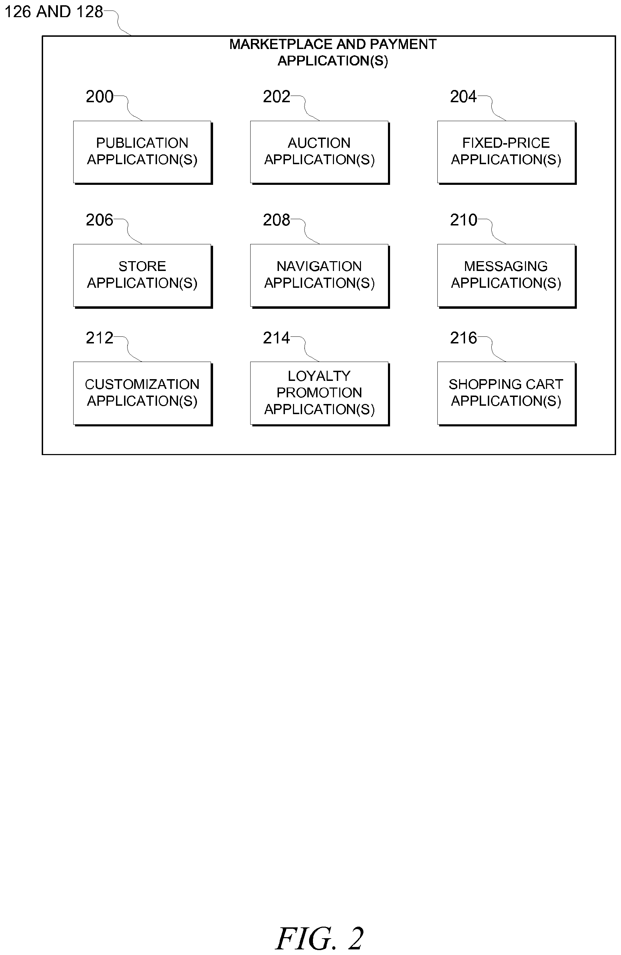

FIG. 2 is a block diagram illustrating multiple applications 126 and 128 that, in one example embodiment, are provided as part of the network-based marketplace 102. The applications 126 and 128 may be hosted on dedicated or shared server machines (not shown) that are communicatively coupled to enable communications between server machines. The applications 126 and 128 themselves are communicatively coupled (e.g., via appropriate interfaces) to each other and to various data sources, so as to allow information to be passed between the applications 126 and 128 or so as to allow the applications 126 and 128 to share and access common data. The applications 126 and 128 may furthermore access one or more databases 134 via the database server 132.

The network-based marketplace 102 may provide a number of publishing, listing and price-setting mechanisms whereby a seller may list (or publish information concerning) goods or services for sale, a buyer can express interest in or indicate a desire to purchase such goods or services, and a price can be set for a transaction pertaining to the goods or services. To this end, the marketplace and payment applications 126 and 128 are shown to include at least one publication application 200 and one or more auction applications 202 which support auction-format listing and price setting mechanisms (e.g., English, Dutch, Vickrey, Chinese, Double, Reverse auctions etc.). The various auction applications 202 may also provide a number of features in support of such auction-format listings, such as a reserve price feature whereby a seller may specify a reserve price in connection with a listing and a proxy-bidding feature whereby a bidder may invoke automated proxy bidding.

A number of fixed-price applications 204 support fixed-price listing formats (e.g., the traditional classified advertisement-type listing or a catalogue listing) and buyout-type listings. Specifically, buyout-type listings (e.g., including the Buy-It-Now (BIN) technology developed by eBay Inc., of San Jose, California) may be offered in conjunction with auction-format listings, and allow a buyer to purchase goods or services, which are also being offered for sale via an auction, for a fixed-price that is typically higher than the starting price of the auction.

Store applications 206 allow a seller to group listings within a "virtual" store, which may be branded and otherwise personalized by and for the seller. Such a virtual store may also offer promotions, incentives and features that are specific and personalized to a relevant seller.

Navigation of the network-based marketplace 102 may be facilitated by one or more navigation applications 208. For example, a search application (as an example of a navigation application) may enable key word searches of listings published via the network-based marketplace 102. A browse application may allow users to browse various category, catalogue, or inventory data structures according to which listings may be classified within the network-based marketplace 102. Various other navigation applications 208 may be provided to supplement the search and browsing applications.

Messaging applications 210 are responsible for the generation and delivery of messages to users of the network-based marketplace 102, such messages for example advising users regarding the status of listings at the network-based marketplace 102 (e.g., providing "outbid" notices to bidders during an auction process or to provide promotional and merchandising information to users). Respective messaging applications 210 may utilize any one of a number of message delivery networks and platforms to deliver messages to users. For example, messaging applications 210 may deliver electronic mail (e-mail), instant message (IM), Short Message Service (SMS), text, facsimile, or voice (e.g., Voice over IP (VoIP)) messages via the wired (e.g., the Internet), Plain Old Telephone Service (POTS), or wireless (e.g., mobile, cellular, WiFi, WiMAX) networks.

The network-based marketplace 102 may support a number of marketplaces that are customized, for example, for specific geographic regions. A version of the network-based marketplace 102 may be customized for the United Kingdom, whereas another version of the network-based marketplace 102 may be customized for the United States. Each of these versions may operate as an independent marketplace, or may be customized (or internationalized) presentations of a common underlying marketplace. The network-based marketplace 102 may accordingly include a number of customization applications 212 that customize information (and/or the presentation of information) by the network-based marketplace 102 according to predetermined criteria (e.g., geographic, demographic or marketplace criteria). For example, the customization applications 212 may be used to support the customization of information for a number of regional websites that are operated by the network-based marketplace 102 and that are accessible via respective web servers 122.

The network-based marketplace 102 itself, or one or more parties that transact via the network-based marketplace 102, may operate loyalty programs that are supported by one or more loyalty/promotions applications 214. For example, a buyer may earn loyalty or promotions points for each transaction established and/or concluded with a particular seller, and be offered a reward for which accumulated loyalty points can be redeemed.

In one embodiment, the electronic shopping cart application(s) 216 are used to create an electronic shopping cart used by users of the network-based marketplace 102 to add and store items listed by the store application(s) 206. The electronic shopping cart application(s) 216 may also be used to "check out," meaning a user may purchase items in the electronic shopping cart. The electronic shopping cart application(s) 216 may facilitate the transactions by automatically finding the items in the electronic shopping cart across at least one or all of a predefined set of vendors, a comparison shopping site, an auction site, etc. In various embodiments, the selection criteria for which vendor or vendors to purchase from may include, but is not limited to, criteria such as lowest cost, fastest shipping time, preferred or highest rated vendors or sellers, or any combination thereof.

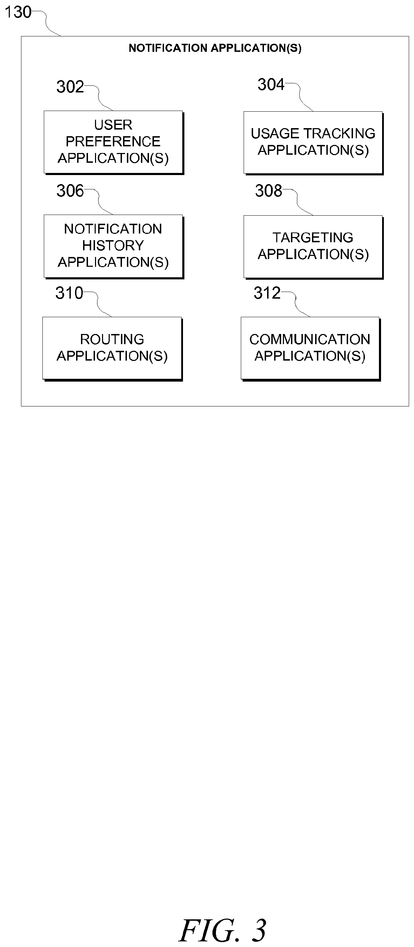

FIG. 3 is a block diagram illustrating multiple notification applications 130 that, in one example embodiment, are provided as part of the network-based marketplace 102. The notification applications 130 may be hosted on dedicated or shared server machines (not shown) that are communicatively coupled to enable communications between server machines. The notification applications 130 themselves are communicatively coupled (e.g., via appropriate interfaces) to each other and to various data sources, so as to allow information to be passed between each of the notification applications 130 or so as to allow the notification applications 130 to share and access common data. The notification applications 130 may furthermore access server one or more databases 134 via the database servers 132.

As illustrated in FIG. 3, the notification applications 130 may include one or more user preference applications 302. The user preference applications 302 may provide a user interface to facilitate the selection of a number of different user preference settings associated with receiving notifications. The user preference application 302 may further store each set of user preference settings corresponding to each user of the network-based marketplace 102 in database 134. In some embodiments, the user preference settings may include a specified device of the user (e.g., client device 106) to which all notifications may be communicated. In other embodiments, a user having multiple devices executing multiple applications associated with a particular notification type may, in addition to specifying a device, specify an application for receiving notifications. Depending on the form of the specified device or application, the user preference settings may include a number of different specified communication types for communicating notifications. Communication types may, for example, include push notifications, e-mail, IM, SMS, text, facsimile, voice (e.g., Voice over IP (VoIP)) messages, and the like.

In some embodiments, the user preference settings may include a specified time in which notifications are to be received. The specified time may be a time range in which the user wishes to not receive messages, or, in some embodiments, the user may specify a time in which notifications may be received without an alert.

In some embodiments, the user preference settings may allow a user to "subscribe" to at least one notification type for which notifications are to be received by the user. Each notification type may include one or more notification events, which may trigger the communication of a notification to the user. The notification events may correspond to functions of the various modules of the network-based marketplace 102, as discussed above with reference to FIG. 1 and 2. Notification events may, for example, include a user being outbid on an item offered for sale in an auction; an auction for an item of interest to the user ending soon; an auction for an item bid on by a user ending soon; a bid being received for an item offered for sale by a seller; a new discount on items of interest to a user; a coupon or reward being offered by a merchant; expiration of reward points offered by a merchant; an offer being made on an item; an offer being declined by a seller; a counter offer being received; a search result being saved; an item being marked as shipped; an item being marked as paid; an item being sold; a winning bid in an auction being placed; checkout for an item being complete; a message being received, and the like.

As illustrated in FIG. 3, the notification applications 130 may also include one or more usage tracking applications 304. The usage tracking applications 304 may be configured to monitor, track, and record the activities and interactions of a user, using one or more devices (e.g., client device 106), with the various modules of the network-based marketplace 102. The usage tracking applications 304 may store usage information corresponding to one or more users in database(s) 134 so as to create a usage profile associated with each user of the network-based marketplace 102. In some embodiments, the usage tracking applications 304 may work in conjunction with the navigation applications 208 of FIG. 2 to monitor and store the activity of the user associated with the searching and browsing of listings published via the network-based marketplace 102.

In some embodiments, the usage tracking applications 304 may track and record the timing and frequency of use of each device of a user on the network-based marketplace 102. Such usage information may be used to determine a selected device of the user. In some embodiments, the selected device may be a preferred device of the user for receiving notifications. For example, the selected device may be the last used device by the user or the device most often used by the user.

In some embodiments, the usage tracking applications 304 may track and record the timing and frequency of use of a particular application installed on one or more devices of a user. The information regarding the timing and frequency of use of an application may be used to determine a selected application for receipt of notifications, wherein the selected application may be a preferred application of the user for receiving notifications. In some embodiments, the usage tracking applications 304 may track and record the timing associated with an acknowledgement of receipt of notifications communicated by communication applications 312. Such information may be used to determine a time for communicating notifications to a user.

One having ordinary skill in the art will recognize that the usage information obtained by the usage tracking applications 304 may provide an indication of the user's actual preference in receiving notifications from the network-based marketplace 102. To this end, the usage tracking applications 304 may work in conjunction with the user preference application 302 to determine the user's preferences based on the usage information collected by the usage tracking applications 304. For example, it may be determined that a user who checks notifications only during a certain time may want to have notifications sent only at that time. In another example, it may be determined that a user who frequently checks notifications on a particular device may want to have notifications sent only to that particular device.

In some embodiments, it may be determined from the usage information that a user may have multiple devices executing multiple applications, each of which may be associated with a common notification event. In this embodiment, duplicate notifications may be suppressed and not delivered to each associated application of each device of the user so as to eliminate the communication of unnecessary duplicate notifications to the user. The determination of the particular application for which notifications are to be communicated may be based on the category of an item associated with the notification, the notification type, or the timing of the notification. For example, a notification that a user has been outbid in an online auction for an automobile may be routed to a particular device of the user executing an application specifically tailored for bidding on automobile auctions over the network-based marketplace 102 and all other duplicate notifications associated with other user devices and applications executed therein will be suppressed.

The notification history applications 306 may be configured to cause a notification communicated to a user device to be stored so as to allow the user to view the notification at a later time. In some embodiments, the notification history applications 306 may store the notification in database 134, which may be retrieved and communicated to the user in accordance with user preference information.

In other embodiments, the notification history applications 306 may transmit instructions to the client device 106 which cause the client device 106 to store the notification to a computer readable medium of the client device 106. The notification history application 306 may facilitate the viewing of unviewed notifications through a user interface of the client device. The user interface may provide the user an option to mark each application as "Read" or "Unread" and the user may be able to configure the interface to provide notifications marked as "Unread" at a later specified time.

The targeting applications 308 may allow users to target or "broadcast" notifications to a group of users based on certain criteria. The criteria may, for example, include the geography of the user, transaction history, or use of particular applications installed on the client device 106. Whether a user fulfills a specified criteria may be determined by user preference settings or the usage information obtained by the user preference applications 302 and usage tracking applications 304, respectively. For example, a merchant may broadcast notifications to all users who have subscribed to such notifications via a particular internationally customized marketplace of the network-based marketplace 102.

In some embodiments, the routing applications 310 may determine a selected device to route notifications based on usage information, user preference settings, or a combination of both. For example, the routing application 310 may route a notification to a particular device of a user in the morning and route another notification to another device in the evening based on the usage information indicating that the user regularly uses a particular device in the morning and another device in the evening. In some embodiments, the routing notifications 310 may determine one or more selected applications to send a notification based on usage information or user preference settings or a combination of both. For example, the routing applications 310 and communication applications 312 may route and communicate a notification associated with a particular application to a particular device of the user, and the routing applications 310 and communication applications 312 may route and communicate another notification associated with a different application to another device of the user based on the user's preference settings.

The communication applications 312 are responsible for the generation and delivery of notifications to users of the network-based marketplace 102. The communication applications 312 may deliver notifications to the one or more devices selected by the routing notification 310 and may communicate notifications in accordance with user preferences. In some embodiments, a notification may be pushed to a push notification network associated with the one or more devices, which may facilitate the delivery of the notification to each device. In some embodiments, an uninterrupted connection with the client device 106 over the network 104 enables the communication applications 312 to push notifications to a user device without the need for associated applications being executed on the client device 106. In other embodiments, the communication applications 312 may work in conjunction with the messaging applications 210 of FIG. 2 to communicate notifications to a user utilizing a number of message delivery networks and platforms, as discussed above with respect to the messaging applications 210. In some embodiments, the user may specify a message delivery network or platform at the user interface module provided by the user preference applications 302.

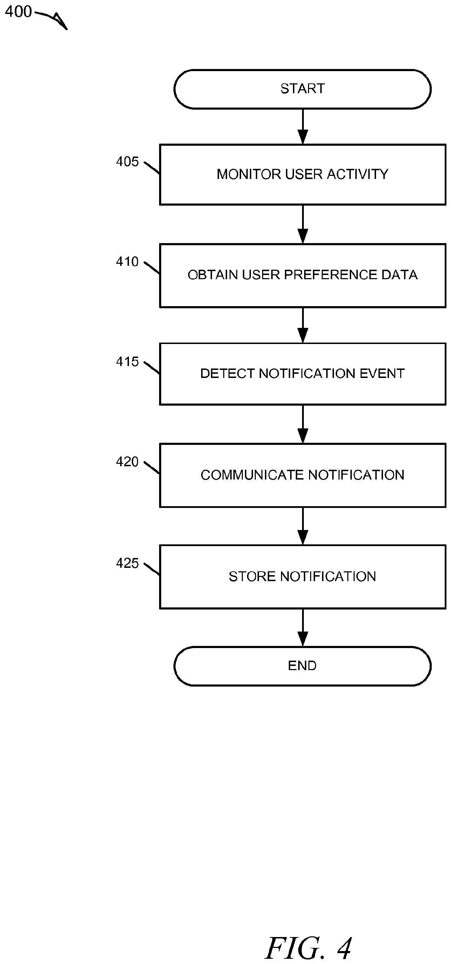

FIG. 4 shows a flowchart illustrating an example method 400 of routing notifications to a client device, according to an example embodiment. In this example, the method 400 may include operations such as monitoring user activity (operation 405), obtaining user preference data (operation 410), detecting a notification event (operation 415), communicating notification to the user (operation 420), and storing the notification (operation 425).

In operation 405, the activity of a user of a device is monitored by the usage tracking application 304. In some embodiments, the activity of a user may correspond to one or more of the various functions provided by the network-based marketplace 102. For example, the usage tracking application 304 may monitor and track a user's purchase of an item listed for sale, via the marketplace applications 126, on client device 106. In some embodiments, the usage tracking applications 304 may store usage data collected from monitoring a user's activity in a repository, such as database 134.

In operation 410, user preference data is obtained by the user preference application 302. The user preference data may be determined based on the usage data received by the usage tracking application 304. In some embodiments, the operations 405 and 410 may occur in parallel so as to obtain user preference data while monitoring user activity. For example, the user preference application 302 may determine that a user would like to receive notifications to a particular device based on the device being the last device used to access notifications from the network-based marketplace 102.

In some embodiments, the user preference data may also include one or more user preference settings received from a user at a user interface provided by the user preference applications 302, which may explicitly indicate a user's preference in the receiving and routing of notifications. User preference settings may, for example, include a specified device to which notifications may be sent, a specified timing for receiving notifications, a specified notification type (e.g., an "Out-bid" notice, "Item won" notice, or "Message Received" notice) or a specified communication type (e.g., push notifications, SMS, or email).

In operation 415, the user preference application 302 may receive an indication from the marketplace application 126 or payment application 128 that a notification event associated with a particular user has occurred. The notification event may correspond to an event related to one or more operations of network-based marketplace 102 (e.g., users bidding on an item offered in an online auction). Upon receiving the indication from the marketplace application 126 or payment application 128, the user preference applications 302 may determine whether the notification event fulfills one or more criteria based on the user's preference for receiving notifications. In some embodiments, the user preference application 302 may determine whether the notification event corresponds to a notification type subscribed to by a user to trigger the sending of a notification, which is specified by the user at the user interface provided by the user preference applications 302. For example, a user may be provided a notification that the user has been outbid on an item (a notification event) if the user preference applications 302 determine that the user has subscribed to bidding activity notifications (a notification type).

In operation 420, in response receiving the indication that a notification event has occurred, a notification is communicated by the communication applications 312 to at least one device determined by the routing applications 310. The routing applications 310 may determine one or more devices to which a notification should be routed based on the user preference data. For example, a notification may be communicated to a particular device based on the routing applications 310 determining that a particular device is the most often used device of the user. In another example, the communication applications 312 may wait to communicate a notification to the client device 106 at a pre-determined time based on the usage data indicating that the user would rather receive notifications during the pre-determined time. In another example, the communication applications 312 may communicate only a single notification to a client device 106 based on the routing applications 310 determining that a particular application, which may be associated with the receipt of a notification, is installed on the device.

Method 400 may also transmit instructions to the client device which cause the device to store the notification in operation 425. The notification history applications 306 may further provide instructions to the client device which cause the device to display a user interface allowing for the user to view previously stored notifications. In some embodiments, the notification may be stored in database 134 prior to communicating the notification to a device of the user.

### EXAMPLE USER INTERFACE

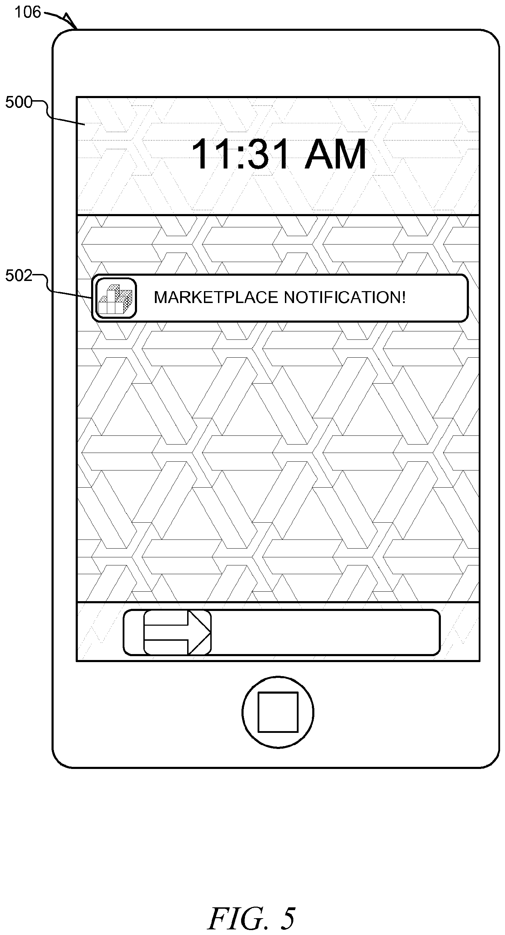

FIG. 5 illustrates a portion of an example user interface 500 including a notification 502 provided to a client device 106. As illustrated in FIG. 5, the client device 106 is in the form of a smartphone. Other client devices may include, but are not limited to, laptop computers and mobile phones (e.g., smart phones). In various embodiments, the client device 106 includes one or more applications that are executed by at least one processor. The executed applications may be configured to perform the functions and methods described herein.

The notification 502 may be communicated to the client device 106 without any of the one or more applications being executed by the client device 106 and may be routed to the client device 106 according to user preference settings, usage information or a combination of both. The notification 502 may be any one of the notifications types described herein. For example, the notification 502 may indicate that the user of client device 106 has placed the winning bid on an item offered in an online auction. Further, the notification 502 may be communicated by any of communication types described herein.

### EXAMPLE CLIENT DEVICE

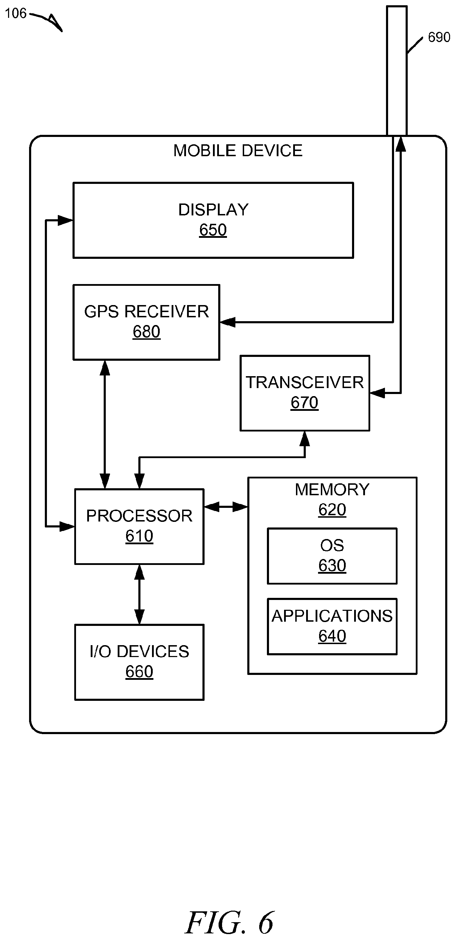

FIG. 6 is a block diagram illustrating a client device 106, such as a mobile device, according to an example embodiment. The client device 106 may include a processor 610. The processor 610 may be any of a variety of different types of commercially available processors suitable for mobile devices (e.g., an XScale architecture microprocessor, a Microprocessor without Interlocked Pipeline Stages (MIPS) architecture processor, or another type of processor). A memory 620, such as a Random Access Memory (RAM), a Flash memory, or other type of memory, is typically accessible to the processor 610. The memory 620 may be adapted to store an operating system (OS) 630, as well as application programs 640, such as a mobile location enabled application that may provide location based services (e.g., physical location check-in) to a user. The processor 610 may be coupled, either directly or via appropriate intermediary hardware, to a display 650 and to one or more input/output (I/O) devices 660, such as a keypad, a touch panel sensor, a microphone, and the like. Similarly, in some embodiments, the processor 610 may be coupled to a transceiver 670 that interfaces with an antenna 690. The transceiver 670 may be configured to both transmit and receive cellular network signals, wireless data signals, or other types of signals via the antenna 690, depending on the nature of the client device 106 (FIG. 1). In this manner, the connection 118 (FIG. 1) with the network 104 (FIG. 1) may be established. Further, in some configurations, a GPS receiver 680 may also make use of the antenna 690 to receive GPS signals.

### MODULES, COMPONENTS AND LOGIC

Certain embodiments are described herein as including logic or a number of components, modules, or mechanisms. Modules may constitute either software modules (e.g., code embodied on a machine-readable medium or in a transmission signal) or hardware modules. A hardware module is a tangible unit capable of performing certain operations and may be configured or arranged in a certain manner. In example embodiments, one or more computer systems (e.g., a standalone, client or server computer system) or one or more hardware modules of a computer system (e.g., a processor or a group of processors) may be configured by software (e.g., an application or application portion) as a hardware module that operates to perform certain operations as described herein.

In various embodiments, a hardware module may be implemented mechanically or electronically. For example, a hardware module may comprise dedicated circuitry or logic that is permanently configured (e.g., as a special-purpose processor, such as a field programmable gate array (FPGA) or an application-specific integrated circuit (ASIC)) to perform certain operations. A hardware module may also comprise programmable logic or circuitry (e.g., as encompassed within a general-purpose processor or other programmable processor) that is temporarily configured by software to perform certain operations. It will be appreciated that the decision to implement a hardware module mechanically, in dedicated and permanently configured circuitry, or in temporarily configured circuitry (e.g., configured by software) may be driven by cost and time considerations.

Accordingly, the term "hardware module" should be understood to encompass a tangible entity, be that an entity that is physically constructed, permanently configured (e.g., hardwired) or temporarily configured (e.g., programmed) to operate in a certain manner and/or to perform certain operations described herein. Considering embodiments in which hardware modules are temporarily configured (e.g., programmed), each of the hardware modules need not be configured or instantiated at any one instance in time. For example, where the hardware modules comprise a general-purpose processor configured using software, the general-purpose processor may be configured as respective different hardware modules at different times. Software may accordingly configure a processor, for example, to constitute a particular hardware module at one instance of time and to constitute a different hardware module at a different instance of time.

Hardware modules can provide information to, and receive information from, other hardware modules. Accordingly, the described hardware modules may be regarded as being communicatively coupled. Where multiple of such hardware modules exist contemporaneously, communications may be achieved through signal transmission (e.g., over appropriate circuits and buses) that connect the hardware modules. In embodiments in which multiple hardware modules are configured or instantiated at different times, communications between such hardware modules may be achieved, for example, through the storage and retrieval of information in memory structures to which the multiple hardware modules have access. For example, one hardware module may perform an operation and store the output of that operation in a memory device to which it is communicatively coupled. A further hardware module may then, at a later time, access the memory device to retrieve and process the stored output. Hardware modules may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions. The modules referred to herein may, in some example embodiments, comprise processor-implemented modules.

Similarly, the methods described herein may be at least partially processor-implemented. For example, at least some of the operations of a method may be performed by one or more processors or processor-implemented modules. The performance of certain of the operations may be distributed among the one or more processors, not only residing within a single machine, but deployed across a number of machines. In some example embodiments, the processor or processors may be located in a single location (e.g., within a home environment, an office environment or as a server farm), while in other embodiments the processors may be distributed across a number of locations.

The one or more processors may also operate to support performance of the relevant operations in a "cloud computing" environment or as a "software as a service" (SaaS). For example, at least some of the operations may be performed by a group of computers (as examples of machines including processors), with these operations being accessible via a network (e.g., the Internet) and via one or more appropriate interfaces (e.g., APIs).

### ELECTRONIC APPARATUS AND SYSTEM

Example embodiments may be implemented in digital electronic circuitry, or in computer hardware, firmware, software, or in combinations of them. Example embodiments may be implemented using a computer program product, for example, a computer program tangibly embodied in an information carrier, for example, in a machine-readable medium for execution by, or to control the operation of, data processing apparatus, for example, a programmable processor, a computer, or multiple computers.

A computer program can be written in any form of programming language, including compiled or interpreted languages, and it can be deployed in any form, including as a stand-alone program or as a module, subroutine, or other unit suitable for use in a computing environment. A computer program can be deployed to be executed on one computer or on multiple computers at one site or distributed across multiple sites and interconnected by a communication network.

In example embodiments, operations may be performed by one or more programmable processors executing a computer program to perform functions by operating on input data and generating output. Method operations can also be performed by, and apparatus of example embodiments may be implemented as, special purpose logic circuitry (e.g., a FPGA or an ASIC).

The computing system can include clients and servers. A client and server are generally remote from each other and typically interact through a communication network. The relationship of client and server arises by virtue of computer programs running on the respective computers and having a client-server relationship to each other. In embodiments deploying a programmable computing system, it will be appreciated that both hardware and software architectures merit consideration. Specifically, it will be appreciated that the choice of whether to implement certain functionality in permanently configured hardware (e.g., an ASIC), in temporarily configured hardware (e.g., a combination of software and a programmable processor), or a combination of permanently and temporarily configured hardware may be a design choice. Below are set out hardware (e.g., machine) and software architectures that may be deployed, in various example embodiments.

### EXAMPLE MACHINE ARCHITECTURE AND MACHINE-READABLE MEDIUM

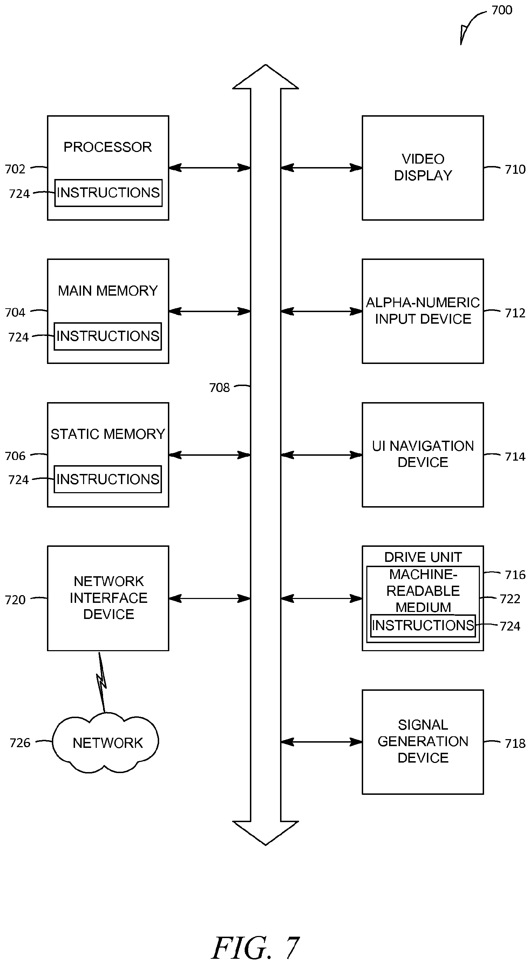

FIG. 7 is a block diagram of a machine in the example form of a computer system 700 within which instructions 724 for causing the machine to perform any one or more of the methodologies discussed herein may be executed. In alternative embodiments, the machine operates as a standalone device or may be connected (e.g., networked) to other machines. In a networked deployment, the machine may operate in the capacity of a server or a client machine in server-client network environment, or as a peer machine in a peer-to-peer (or distributed) network environment. The machine may be a personal computer (PC), a tablet PC, a set-top box (STB), a PDA, a cellular telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 700 includes a processor 702 (e.g., a central processing unit (CPU), a graphics processing unit (GPU) or both), a main memory 704 and a static memory 706, which communicate with each other via a bus 708. The computer system 700 may further include a video display unit 710 (e.g., a liquid crystal display (LCD) or a cathode ray tube (CRT)). The computer system 700 also includes an alphanumeric input device 712 (e.g., a keyboard), a user interface (UI) navigation device 714 (e.g., a mouse), a disk drive unit 716, a signal generation device 718 (e.g., a speaker) and a network interface device 720.

### MACHINE-READABLE MEDIUM

The disk drive unit 716 includes a machine-readable medium 722 on which is stored one or more sets of data structures and instructions 724 (e.g., software) embodying or used by any one or more of the methodologies or functions described herein. The instructions 724 may also reside, completely or at least partially, within the main memory 704, static memory 706, and/or within the processor 702 during execution thereof by the computer system 700, the main memory 704 and the processor 702 also constituting machine-readable media.

While the machine-readable medium 722 is shown in an example embodiment to be a single medium, the term "machine-readable medium" may include a single medium or multiple media (e.g., a centralized or distributed database, and/or associated caches and servers) that store the one or more data structures or instructions 724. The term "machine-readable medium" shall also be taken to include any tangible medium that is capable of storing, encoding or carrying instructions for execution by the machine and that cause the machine to perform any one or more of the methodologies of the present disclosure, or that is capable of storing, encoding or carrying data structures used by or associated with such instructions. The term "machine-readable medium" shall accordingly be taken to include, but not be limited to, solid-state memories, and optical and magnetic media. Specific examples of machine-readable media include nonvolatile memory, including by way of example, semiconductor memory devices (e.g., Erasable Programmable Read-Only Memory (EPROM), Electrically Erasable Programmable Read-Only Memory (EEPROM)) and flash memory devices; magnetic disks such as internal hard disks and removable disks; magneto-optical disks; and CD-ROM and DVD-ROM disks.

### TRANSMISSION MEDIUM

The instructions 724 may further be transmitted or received over a communications network 726 using a transmission medium. The instructions 724 may be transmitted using the network interface device 720 and any one of a number of well-known transfer protocols (e.g., HTTP). Examples of communication networks include a LAN, a WAN, the Internet, mobile telephone networks, Plain Old Telephone (POTS) networks, and wireless data networks (e.g., WiFi and WiMax networks). The term "transmission medium" shall be taken to include any intangible medium that is capable of storing, encoding or carrying instructions for execution by the machine, and includes digital or analog communications signals or other intangible media to facilitate communication of such software.

Although the embodiments of the present invention have been described with reference to specific example embodiments, it will be evident that various modifications and changes may be made to these embodiments without departing from the broader scope of the inventive subject matter. Accordingly, the specification and drawings are to be regarded in an illustrative rather than a restrictive sense. The accompanying drawings that form a part hereof, show by way of illustration, and not of limitation, specific embodiments in which the subject matter may be practiced. The embodiments illustrated are described in sufficient detail to enable those skilled in the art to practice the teachings disclosed herein. Other embodiments may be used and derived therefrom, such that structural and logical substitutions and changes may be made without departing from the scope of this disclosure. This Detailed Description, therefore, is not to be taken in a limiting sense, and the scope of various embodiments is defined only by the appended claims.

Such embodiments of the inventive subject matter may be referred to herein, individually and/or collectively, by the term "invention" merely for convenience and without intending to voluntarily limit the scope of this application to any single invention or inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended; that is, a system, device, article, or process that includes elements in addition to those listed after such a term in a claim are still deemed to fall within the scope of that claim. Moreover, in the following claims, the terms "first," "second," and "third," and so forth are used merely as labels, and are not intended to impose numerical requirements on their objects.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separate embodiment.

## Claims

1. A system comprising:
a user preference module (302) configured to:
obtain user preference data including usage data corresponding to a user, the usage data relating to activity of the user on at least one device (106,108) and indicating a preference of the user in receiving notifications on the at least one device (106, 108) based on the activity, the user preference data including an indication of at least one notification type selected by a user, said at least one notification type including one or more notification events; and
determine that a said notification event indicated by a said user selected notification type of the user preference data has occurred; and
a communication module (312) in communication with the user preference module (302), the communication module (312) configured to provide to the at least one device (106, 108), in response to the determination that the notification event has occurred, a notification in accordance with the user preference data, the notification indicating that the notification event has occurred.

2. The system of claim 1, further comprising:
a notification history module (306) configured to store the notification and facilitate retrieval of the notification for viewing at a later time.

3. The system of claim 1, wherein the communication module (312) is adapted to communicate the notification to the at least one device (106, 108) based on the usage data fulfilling a criteria specified by a merchant.

4. The system of claim 1, further comprising:
a usage tracking module (304) configured to monitor the activity of the user on the at least one device (106, 108) to obtain the usage data and configured to store the usage data in a database.

5. The system of claim 1, wherein the user preference data further includes one or more user designated preference settings associated with receiving notifications on the at least one device (106, 108), the one or more user designated preference settings being specified by the user.

6. The system of claim 1, wherein the notification event is associated with an item offered for sale by an online merchant.

7. The system of claim 1, wherein the user preference data includes an indication of a selected device of the user to which the user is to receive notifications.

8. The system of claim 7, wherein the communication module (312) is adapted to communicate the notification to the selected device; or the selected device of the user is a device last used by the user.

9. The system of claim 1, wherein the user preference data includes:
an indication of a time in which the user is to receive notifications; or
an indication of a specified communication type.

10. A method comprising:
obtaining (410) user preference data including usage data corresponding to a user, the usage data relating to activity of the user on at least one device (106, 108) and indicating a preference of the user in receiving notifications on the at least one device (106, 108), the obtaining (410) of the user preference data including receiving an indication of a selection from a user of at least one notification type, said at least one notification type including one or more notification events;
determining (415) that a said notification event is indicated by a said user selected notification type of the user preference data has occured; and
communicating (420) to the at least one device (106, 108), in response to the determination that the notification event has occurred, a notification in accordance with the user preference data, the notification indicating an occurrence of the notification event.

11. The method of claim 10, further comprising transmitting instructions which cause the at least one user device (106, 108) to store (425) and provide a user interface to view the notification at a later time.

12. The method of claim 10, further comprising monitoring the activity of the user on the at least one device (106, 108) and collecting the corresponding usage data in a repository.

13. The method of claim 10, wherein the notification is communicated to the user based on the usage data fulfilling a criteria specified by an additional user.

14. The method of claim 10, wherein the user preference data:
indicates a selected device of the user and wherein the notification is communicated to the selected device; or
indicates a time for receiving notifications and wherein the notification is communicated to at least one device of the user during the time.

15. A machine-readable medium carrying instructions that, when executed by a machine, cause the machine to carry out the method of any one of claims 10 to 14.

## Patentansprüche

1. System, umfassend:
ein Benutzerpräferenzmodul (302), das dazu konfiguriert ist:
Benutzerpräferenzdaten einzuholen, die einem Benutzer entsprechende Nutzungsdaten einschließen, wobei sich die Nutzungsdaten auf eine Aktivität des Benutzers auf mindestens einer Vorrichtung (106, 108) beziehen und basierend auf der Aktivität eine Präferenz des Benutzers beim Erhalten von Benachrichtigungen auf der mindestens einen Vorrichtung (106, 108) anzeigen, wobei die Benutzerpräferenzdaten eine Angabe mindestens eines von einem Benutzer ausgewählten Benachrichtigungstyps einschließen, wobei der mindestens eine Benachrichtigungstyp ein oder mehrere Benachrichtigungsereignisse einschließt; und
zu bestimmen, dass ein Benachrichtigungsereignis, das durch einen durch den Benutzer ausgewählten Benachrichtigungstyp der Benutzerpräferenzdaten angezeigt ist, eingetreten ist; und
ein Kommunikationsmodul (312), das mit dem Benutzerpräferenzmodul (302) in Kommunikation steht, wobei das Kommunikationsmodul (312) dazu konfiguriert ist, in Reaktion auf die Bestimmung, dass das Benachrichtigungsereignis eingetreten ist, eine Benachrichtigung in Übereinstimmung mit den Benutzerpräferenzdaten an die mindestens eine Vorrichtung (106, 108) bereitzustellen, wobei die Benachrichtigung anzeigt, dass das Benachrichtigungsereignis eingetreten ist.

2. System nach Anspruch 1, weiter umfassend:
ein Benachrichtigungshistorienmodul (306), das dazu konfiguriert ist, die Benachrichtigung zu speichern und einen Wiederabruf der Benachrichtigung zum Ansehen zu einer späteren Zeit zu ermöglichen.

3. System nach Anspruch 1, wobei das Kommunikationsmodul (312) dazu eingerichtet ist, die Benachrichtigung basierend darauf, dass die Nutzungsdaten ein durch einen Händler spezifiziertes Kriterium erfüllen, an die mindestens eine Vorrichtung (106, 108) zu übermitteln.

4. System nach Anspruch 1, weiter umfassend:
ein Nutzungsnachverfolgungsmodul (304), das dazu konfiguriert ist, die Aktivität des Benutzers auf der mindestens einen Vorrichtung (106, 108) zu beobachten, um die Nutzungsdaten einzuholen, und dazu konfiguriert ist, die Nutzungsdaten in einer Datenbank zu speichern.

5. System nach Anspruch 1, wobei die Benutzerpräferenzdaten weiter eine oder mehrere von einem Benutzer ausgewiesene Präferenzeinstellungen einschließen, die mit einem Erhalten von Benachrichtigungen auf der mindestens einen Vorrichtung (106, 108) verbunden sind, wobei die eine oder die mehreren von einem Benutzer ausgewiesenen Präferenzeinstellungen durch den Benutzer spezifiziert sind.

6. System nach Anspruch 1, wobei das Benachrichtigungsereignis mit einem durch einen Onlinehändler zum Verkauf angebotenen Artikel verbunden ist.

7. System nach Anspruch 1, wobei die Benutzerpräferenzdaten eine Angabe einer ausgewählten Vorrichtung des Benutzers, an die der Benutzer Benachrichtigungen erhalten soll, einschließen.

8. System nach Anspruch 7, wobei das Kommunikationsmodul (312) dazu eingerichtet ist, die Benachrichtigung an die ausgewählte Vorrichtung zu übermitteln; oder die ausgewählte Vorrichtung des Benutzers eine zuletzt von dem Benutzer benutzte Vorrichtung ist.

9. System nach Anspruch 1, wobei die Benutzerpräferenzdaten einschließen:
eine Angabe einer Zeit, zu der der Benutzer Benachrichtigungen erhalten soll; oder
eine Angabe eines spezifizierten Kommunikationstyps.

10. Verfahren, umfassend:
Einholen (410) von Benutzerpräferenzdaten, die einem Benutzer entsprechende Nutzungsdaten einschließen, wobei sich die Nutzungsdaten auf eine Aktivität des Benutzers auf mindestens einer Vorrichtung (106, 108) beziehen und eine Präferenz des Benutzers beim Erhalten von Benachrichtigungen auf der mindestens einen Vorrichtung (106, 108) anzeigen, wobei das Einholen (410) der Benutzerpräferenzdaten ein Erhalten einer Angabe einer Auswahl mindestens eines Benachrichtigungstyps von einem Benutzer einschließt, wobei der mindestens eine Benachrichtigungstyp ein oder mehrere Benachrichtigungsereignisse einschließt;
Bestimmen (415), dass ein Benachrichtigungsereignis, das durch einen durch den Benutzer ausgewählten Benachrichtigungstyp der Benutzerpräferenzdaten angezeigt ist, eingetreten ist; und
Übermitteln (420), in Reaktion auf die Bestimmung, dass das Benachrichtigungsereignis eingetreten ist, einer Benachrichtigung in Übereinstimmung mit den Benutzerpräferenzdaten an die mindestens eine Vorrichtung (106, 108), wobei die Benachrichtigung ein Eintreten des Benachrichtigungsereignisses anzeigt.

11. Verfahren nach Anspruch 10, weiter umfassend ein Senden von Befehlen, die bewirken, dass die mindestens eine Benutzervorrichtung (106, 108) eine Benutzeroberfläche speichert (425) und bereitstellt, um die Benachrichtigung zu einer späteren Zeit anzusehen.

12. Verfahren nach Anspruch 10, weiter umfassend ein Beobachten der Aktivität des Benutzers auf der mindestens einen Vorrichtung (106, 108) und ein Sammeln der entsprechenden Nutzungsdaten in einer Ablage.

13. Verfahren nach Anspruch 10, wobei die Benachrichtigung basierend darauf, dass die Nutzungsdaten ein durch einen zusätzlichen Benutzer spezifiziertes Kriterium erfüllen, an den Benutzer übermittelt wird.

14. Verfahren nach Anspruch 10, wobei die Benutzerpräferenzdaten:
eine ausgewählte Vorrichtung des Benutzers anzeigen und wobei die Benachrichtigung an die ausgewählte Vorrichtung übermittelt wird; oder
eine Zeit zum Erhalten von Benachrichtigungen anzeigen und wobei die Benachrichtigung während der Zeit an mindestens eine Vorrichtung des Benutzers übermittelt wird.

15. Maschinenlesbares Medium, das Befehle führt, die, wenn sie von einer Maschine ausgeführt werden, bewirken, dass die Maschine das Verfahren nach einem der Ansprüche 10 bis 14 ausführt.

## Revendications

1. Système comprenant :
un module de préférence d'utilisateur (302) configuré pour :
obtenir des données de préférence d'utilisateur incluant des données d'utilisation correspondant à un utilisateur, les données d'utilisation concernant une activité de l'utilisateur sur au moins un appareil (106, 108) et indiquant une préférence de l'utilisateur pour recevoir des notifications sur le au moins un appareil (106, 108) sur la base de l'activité, les données de préférence d'utilisateur comprenant une indication d'au moins un type de notification sélectionné par l'utilisateur, ledit au moins un type de notification incluant un ou plusieurs événements de notification ; et
déterminer qu'un événement de notification indiqué par ledit type de notification sélectionné par l'utilisateur des données de préférence d'utilisateur s'est produit ; et
un module de communication (312) en communication avec le module de préférence d'utilisateur (302), le module de communication (312) étant configuré pour fournir au au moins un dispositif (106, 108), en réponse à la détermination que l'événement de notification s'est produit, une notification conformément aux données de préférence d'utilisateur, la notification indiquant que l'événement de notification s'est produit.

2. Système selon la revendication 1, comprenant en outre :
un module d'historique de notification (306) configuré pour stocker la notification et faciliter une récupération de la notification pour une visualisation à un instant ultérieur.

3. Système selon la revendication 1, dans lequel le module de communication (312) est adapté pour communiquer la notification au au moins un dispositif (106, 108) sur la base des données d'utilisation remplissant un critère spécifié par un commerçant.

4. Système selon la revendication 1, comprenant en outre :
un module de suivi d'utilisation (304) configuré pour surveiller l'activité de l'utilisateur sur le au moins un dispositif (106, 108) afin d'obtenir les données d'utilisation et configuré pour stocker les données d'utilisation dans une base de données.

5. Système selon la revendication 1, dans lequel les données de préférence d'utilisateur incluent en outre un ou plusieurs paramètres de préférence désignés par l'utilisateur associés à la réception de notifications sur le au moins un dispositif (106, 108), les un ou plusieurs paramètres de préférence désignés par l'utilisateur étant spécifiés par l'utilisateur.

6. Système selon la revendication 1, dans lequel l'événement de notification est associé à un article proposé à la vente par un commerçant en ligne.

7. Système selon la revendication 1, dans lequel les données de préférence d'utilisateur incluent une indication d'un dispositif sélectionné de l'utilisateur duquel l'utilisateur doit recevoir des notifications.

8. Système selon la revendication 7, dans lequel le module de communication (312) est adapté pour communiquer la notification au dispositif sélectionné ; ou le dispositif sélectionné de l'utilisateur est un appareil utilisé en dernier par l'utilisateur.

9. Système selon la revendication 1, dans lequel les données de préférence d'utilisateur incluent :
une indication d'un temps pendant lequel l'utilisateur doit recevoir des notifications ; ou
une indication d'un type de communication spécifié.

10. Procédé comprenant les étapes consistant à :
obtenir (410) des données de préférence d'utilisateur incluant des données d'utilisation correspondant à un utilisateur, les données d'utilisation relatives à l'activité de l'utilisateur sur au moins un dispositif (106, 108) et indiquer une préférence de l'utilisateur pour recevoir des notifications sur le au moins un dispositif (106, 108), l'obtention (410) des données de préférence d'utilisateur incluant une réception d'une indication d'une sélection de la part d'un utilisateur d'au moins un type de notification, ledit au moins un type de notification incluant un ou plusieurs événements de notification ;
déterminer (415) qu'un événement de notification indiqué par un type de notification sélectionné par l'utilisateur des données de préférence d'utilisateur s'est produit ; et
communiquer (420) au au moins un dispositif (106, 108), en réponse à la détermination que l'événement de notification s'est produit, une notification conformément aux données de préférence d'utilisateur, la notification indiquant une occurrence de l'événement de notification.

11. Procédé selon la revendication 10, comprenant en outre une transmission d'instructions qui amènent le au moins un dispositif utilisateur (106, 108) à stocker (425) et à fournir une interface utilisateur pour afficher la notification à un instant ultérieur.

12. Procédé selon la revendication 10, comprenant en outre une surveillance de l'activité de l'utilisateur sur le au moins un dispositif (106, 108) et une collecte des données d'utilisation correspondantes dans un référentiel.

13. Procédé selon la revendication 10, dans lequel la notification est communiquée à l'utilisateur sur la base des données d'utilisation remplissant un critère spécifié par un utilisateur supplémentaire.

14. Procédé selon la revendication 10, dans lequel les données de préférence d'utilisateur :
indiquent un dispositif sélectionné de l'utilisateur et dans lequel la notification est communiquée au dispositif sélectionné ; ou
indiquent un instant pour une réception de notifications et dans lequel la notification est communiquée à au moins un dispositif de l'utilisateur pendant l'instant.

15. Support lisible par machine portant des instructions qui, lorsqu'elles sont exécutées par une machine, amènent la machine à exécuter le procédé selon l'une quelconque des revendications 10 à 14.
